Europäisches Patentamt

European Patent Office

Office européen des brevets

(11) Veröffentlichungsnummer: **0 470 387 A1**

# EUROPÄISCHE PATENTANMELDUNG

(21) Anmeldenummer: **91111534.3**

(22) Anmeldetag: **11.07.91**

(51) Int. Cl.5: **C08L 75/04**, C08K 5/54, C09K 3/10

(30) Priorität: **26.07.90 DE 4023702**

(43) Veröffentlichungstag der Anmeldung:
**12.02.92 Patentblatt 92/07**

(84) Benannte Vertragsstaaten:
**AT BE CH DE DK ES FR GB GR IT LI LU NL SE**

(71) Anmelder: **ERNST SONDERHOFF GmbH & Co. KG**
**Erlenweg 13**
**W-5000 Köln 30(DE)**

(72) Erfinder: **Giesen, Franz-Josef**
**Zum Hahnacker 43**
**W-5010 Bergheim-Fliesteden(DE)**

(74) Vertreter: **Vollbach, Hans, Dipl.-Ing.**
**Patentanwälte Dipl.-Ing. Buschhoff Dipl.Ing**
**Hennicke Dipl.-Ing. Vollbach**
**Kaiser-Wilhelm-Ring 24 Postfach 19 04 08**
**W-5000 Köln 1(DE)**

(54) **Wärmehärtende Einkomponenten-Polyurethanmasse, insbesondere zur Verwendung als giess- und spritzfähige Dichtungsmasse.**

(57) Die Erfindung betrifft eine warmhärtende Einkomponenten-Polyurethanmasse, die insbesondere zur Verwendung als gieß- oder spritzfähige Dichtungsmasse für die Herstellung blähgummiartiger Dichtungen in der Emballagenindustrie, für Gehäusedichtungen und ähnliche Zwecke bestimmt ist. Nach der Erfindung weist die Einkomponenten-Polyurethanmasse 0,5 bis 5 Gew.-% Alkylsilan zusammen mit einem Treibmittel und gegebenenfalls weiteren Zusatzstoffen üblicher Art auf. Die erfindungsgemäße polymere Masse läßt sich wie PVC-Plastisol auf den hierfür gebräuchlichen Anlagen verarbeiten. Sie weist zumindest annähernd gleiche Dichtungseigenschaften auf, wie die herkömmlichen PVC-Dichtungen.

EP 0 470 387 A1

Rank Xerox (UK) Business Services

Die Erfindung betrifft eine warmhärtende Einkomponenten-Polyurethanmasse, insbesondere zur Verwendung als gieß- und spritzfähige Dichtungsmasse für die Herstellung von blähgummiartigen Dichtungen in der Emballagenindustrie, für Gehäusedichtungen u.dgl.

In der Emballagenindustrie und auf anderen Gebieten werden in großem Umfang blähgummiartige PVC-Dichtungen durch Eingießen eines PVC-Plastisols in die Deckelnut und anschliessende Ausheizung der Dichtungsmasse in einem Durchlaufofen hergestellt. Die weitverbreiteten PVC-Dichtungen haben sich zwar in der Praxis bewährt; sie schaffen jedoch aufgrund ihres Chlorgehaltes bei der Entsorgung Umweltprobleme. Es gilt daher, eine gut verarbeitbare Dichtungsmasse zu finden, die frei von Halogen ist und deren Verwendung daher zu keinen Umweltproblemen führt, die sich andererseits aber auf den für die Herstellung der PVC-Dichtungen vorhandenen maschinellen Anlagen verarbeiten läßt und zumindest annähernd die gleichen Dichtungseigenschaften aufweist wie die gebräuchlichen PVC-Dichtungen und insgesamt eine wirtschaftlich günstige Substitution der PVC-Dichtungen darstellt. Die Erfindung ist auf die Lösung dieser Aufgabe gerichtet.

Die vorgenannte Aufgabe wird mit der erfindungsgemäßen Einkomponenten-Polyurethanmasse dadurch gelöst, daß sie 0,5 bis 5 Gew.-% Alkylsilan zusammen mit einem Treibmittel und gegebenenfalls Zusatzstoffen bekannter Art enthält. Vorzugsweise enthält dabei die Polyurethanmasse einen Härter, insbesondere eine aliphatische Diamin-Härterkomponente. Für das Treibmittel wird zweckmäßig ein Stickstoff abspaltendes Treibmittel, wie vor allem Azodicarbonamid eingesetzt. Ferner empfiehlt es sich, der Masse einen Weichmacher, z.B. Dioctyphtalat zuzusetzen. Als Zusatzstoffe kommen die hierfür üblichen Stoffe in Betracht, insbesondere ein Füllstoff, wie z.B. Quarzmehl, ein Flammschutzmittel, z.B. Aluminiumhydroxyd, und gegebenenfalls ein Farbpigment.

Mit der Erfindung wurde eine polymere Masse aufgefunden, die sich wie PVC-Plastisol auf den hierfür gebräuchlichen maschinellen Anlagen verarbeiten läßt, zumindest annähernd gleiche Dichtungseigenschaften hat wie die PVC-Dichtungen und die, da sie halogenfrei ist, umweltschonend ist.

Es ist bekannt, daß eine Masse, bestehend aus einem herkömmlichen Einkomponenten-Polyurethan-Grundkörper, z.B. TDI-Prepolymer, und aliphatischem Diaminhärter bei Zusatz eines z.B. Stickstoff abspaltenden Treibmittels, wie Azodicarbonamid, zu Schaumgummi verarbeitet werden kann. Die Verarbeitung bedarf einer exakten Temperaturführung bei einer Ausheiztemperatur von etwa 160 ˚C und bei verhältnismäßig langer Ausheizzeit, die in der Größenordnung von 30 bis 60 Minuten liegt. Bei höherer Ausheiztemperatur oberhalb 180 ˚C depolymerisiert die Masse und wird für Dichtungszwecke untauglich. Eine wirtschaftliche Fertigung unter Ausnutzung der vorhandenen PVC-Plastisol-Verarbeitungsanlagen ist daher bei den vorgenannten Massen nicht möglich. Dadurch, daß nach der Erfindung dem genannten Einkomponenten-Polyurethan-Grundkörper, z.B. dem TDI-Prepolymer, neben den genannten Komponenten noch Alkylsilan in einer Menge von 0,5 bis 5 Gew.-% zugesetzt wird, ergeben sich überraschenderweise Eigenschaften, die es möglich machen, die Einkomponenten-Polyurethanmasse auf den gebräuchlichen PVC-Plastisol-Verarbeitungsanlagen zu verarbeiten. Mit dem zugesetzten Alkylsilan ergeben sich dabei vor allem folgende Wirkungen:

Das Alkylsilan wirkt als Hitzestabilisator, so daß die Masse höhere Ausheizbedingungen, d.h. vor allem eine höhere Ausheiztemperatur und auch längere Ausheizzeiten verträgt, ohne daß es zu einer schädlichen Depolymerisation der Polyurethankomponente kommt. Damit ist es bei Verwendung der erfindungsgemäßen Dichtungsmasse möglich, mit Ausheiztemperaturen oberhalb 180 ˚C zu arbeiten, was sich in den vorhandenen PVC-Öfen durchführen läßt. Zugleich lassen sich die Ausheizzeiten auf einige wenige Minuten herabsetzen, so daß auch insoweit eine wirtschaftliche Verarbeitung möglich ist.

Mit dem Zusatz an Alkylsilan wird auch die Viskosität der Einkomponenten-Dichtungsmasse gesenkt. Damit ergibt sich ein gutes Fließverhalten der ansonsten flüssig-zähen Masse. Zugleich wird mit der Herabsetzung der Viskosität die Entlüftung, d.h. der Austritt der in der Masse eingeschlossenen Luft begünstigt. Des weiteren fördert das Alkylsilan die Bildung von mikrozellularen geschlossenen Poren in der Treib- und Vernetzungsphase der Masse.

Weiterhin kommt dem Alkylsilan die an sich bekannte Wirkung als Haftvermittler zu, so daß sich selbst bei leicht eingeölten Deckeln o.dgl. eine sehr gute Haftung der blähgummiartigen Dichtung am Dichtungssitz erreichen läßt.

Das Alkylsilan wird in das Netzwerk des Polyurethan-Grundkörpers eingebaut. Die Silicium-Bausteine fördern die chemische Resistenz des Polyurethan-Grundkörpers und verbessern dessen Wärmebeständigkeit, so daß im Gegensatz zu Polyvinylchlorid in der Wärme deutlich bessere Rückverformungswerte, das wichtigste Kriterium einer Dichtung, erhalten werden. Die Kälteflexibilität ist ebenfalls deutlich besser als bei PVC.

Mit der Erfindung wird somit ein PVC-Ersatz-Blähgummi geschaffen, der neben seiner Wirtschaftlichkeit auf vorhandenen PVC-Anlagen gut und sicher verarbeitet werden kann und dabei eine hohe Dichtungsqualität erreicht. Ein Nachteil der erfindungsgsgemäß hergestellten modifizierten Polyurethan-Dichtungsmasse gegenüber den PVC-Dichtungen hinsichtlich der Beständigkeit gegenüber einigen Lösungsmitteln besteht nicht. Die modifizierte Polyurethan-Dichtungsmasse nach der Erfindung erweicht in manchen Ketonen, Estern u.dgl., dichtet jedoch weiterhin ab. Im Gegensatz hierzu wird der PVC-Blähgummi unter dem Einfluß mancher Lösungsmittel durch Weichmacherverlust hart und spröde und verliert an Dichtigkeit. Davon abgesehen bestehen insbesondere für Gefahrgüter Deckelkonstruktionen, bei denen das Füllgut nicht mit der Deckeldichtung in direktem Kontakt gelangen kann.

Die erfindungsgemäße modifizierte Polyurethan-Dichtungsmasse kann auch ohne Treibmittel zu Elastomeren verarbeitet werden, beispielsweise im Spritz- oder Tauchverfahren als Beschichtungsmasse. Auch kann die erfindungsgemäße Masse zur Korrosionsbeschichtung, zu Isolierzwecken oder zu Dämpfungszwecken eingesetzt werden.

Für das Alkylsilan kann Hexadecyltrimethoxisilan, Octyltrimethoxisilan oder ein chemisch verwandtes Produkt, auch unter Verwendung einer epoxy- oder stickstoffhaltigen funktionellen Gruppierung eingesetzt werden.

Im folgenden wird als Beispiel eine Rezeptur für eine erfindungsgemäße Einkomponenten-Polyurethan-Dichtungsmasse zur Herstellung einer blähgummiartigen Dichtung mit gutem Rückverformungsvermögen angegeben:

| | |
|---|---|
| Polyurethan-Grundkörper,nämlich TDI-Prepolymer | 100 g |
| Härter, nämlich aliphatisches Diamin | 10 g |
| Alkylsilan | 2 g |
| Weichmacher, z.B. Dioctyphtalat | 20 g |
| Treibmittel, nämlich Azodicarbonamid | 1 g |
| Farbpigment | 1 g |
| Füllstoff, z.B. Quarzmehl,und Flammschutzmittel, nämlich Aluminiumhydroxyd | 30 g |

Die im Gegensatz zu PVC-Plastisol viskositätskonstante Masse nach der vorstehend angegebenen Rezeptur kann mit Hilfe der für die Herstellung von PVC-Dichtungen gebräuchlichen Anlagen verarbeitet werden. Sie läßt sich automatisch z.B. in eine Deckelnut einspritzen. Der Deckel durchläuft dann den Durchlaufofen, wobei die Ausheizzeit bei einer Ausheiztemperatur von etwa 200° C ca. 3 Minuten beträgt. Nach Abkühlung des Deckels hat sich in dessen Deckelnut ein Blähgummi mit guten Dichteigenschaften gebildet.

Da bei Verwendung der erfindungsgemäßen modifizierten Polyurethan-Dichtungsmasse mit erhöhten Ausheiztemperaturen oberhalb 180° C gearbeitet werden kann, ergeben sich vergleichsweise kurze Ausheizzeiten von nur einigen wenigen Minuten. Der Anteil an Alkylsilan liegt, wie erwähnt, zwischen 0,5 und 5 Gew.-%, bezogen auf die Gesamtmasse. Er kann innerhalb dieses Bereichs je nach Rezeptur schwanken. Die modifizierte Polyurethanmasse nach der Erfindung ist frei von Halogenen und organischen Lösungsmitteln.

**Patentansprüche**

1. Warmhärtende Einkomponenten-Polyurethanmasse, insbesondere zur Verwendung als gieß- und spritzfähige Dichtungsmasse für die Herstellung blähgummiartiger Dichtungen in der Emballagenindustrie, für Gehäusedichtungen u.dgl., **dadurch gekennzeichnet,** daß sie 0,5 bis 5 Gew.-% Alkylsilan zusammen mit einem Treibmittel und gegebenenfalls Zusatzstoffen bekannter Art enthält.

2. Polyurethanmasse nach Anspruch 1, **dadurch gekennzeichnet,** daß sie als Alkylsiloxan Hexadecyltrimethoxisilan, Octyltrimethoxisilan oder chemisch verwandte Produkte, auch unter Verwendung einer epoxy- oder stickstoffhaltigen funktionellen Gruppierung, enthält.

3. Polyurethanmasse nach Anspruch 1 oder 2, **dadurch gekennzeichnet,** daß sie einen Härter, vorzugsweise aliphatisches Diamin, enthält.

4. Polyurethanmasse nach einem der Ansprüche 1 bis 3, **dadurch gekennzeichnet,** daß sie ein stickstoffabspaltendes Treibmittel, vorzugsweise Azidocarbonamid, enthält.

5. Polyurethanmasse nach einem der Ansprüche 1 bis 4, **dadurch gekennzeichnet,** daß sie einen Weichmacher, z.B. Dioctyphtalat, enthält.

6. Polyurethanmasse nach einem der Ansprüche 1 bis 5, **dadurch gekennzeichnet,** daß sie als Zusatzstoffe mindestens einen Füllstoff, wie z.B. Quarzmehl und/oder ein Flammschutzmittel, z.B. Aluminiumhydroxyd, enthält.

7. Polyurethanmasse nach einem der Ansprüche 1 bis 6, **gekennzeichnet durch** folgende Rezeptur:

```
TDI-Prepolymer                              100 g
aliphatisches Diamin (Härter)                10 g
Alkylsilan                                    2 g
Dioctyphtalat (Weichmacher)                  20 g
Azodicarbonamid (Treibmittel)                 1 g
Zusatzstoffe, insbesondere Füllstoff
(z.B. Quarzmehl), Flammschutzmittel
(Aluminiumhydroxyl), Farbpigment             31 g
```

8. Modifizierte Polyurethanmasse nach einem der Ansprüche 1 bis 7, **dadurch gekennzeichnet,** daß sie als Beschichtungsmasse zur Abdichtung, Isolierung, Verklebung, Dämpfung oder Korrosionsschutz frei von Treibmittel verarbeitet wird.

4

## EINSCHLÄGIGE DOKUMENTE

EP 91111534.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | EP - A1 - 0 086 271 (SCHERING AKTIENGESELLSCHAFT) * Beispiele; Ansprüche * -- | 1-8 | C 08 L 75/04 C 08 K 5/54 C 09 K 3/10 |
| A | DE - A1 - 3 414 877 (HENKEL KGaA) * Beispiele; Ansprüche * ---- | 1-8 | |

RECHERCHIERTE SACHGEBIETE (Int. Cl.⁵)

C 08 K
C 08 L 75/00
C 09 K

Der vorliegende Recherchenbericht wurde für alle Patentansprüche erstellt.

| Recherchenort | Abschlußdatum der Recherche | Prüfer |
|---|---|---|
| WIEN | 28-10-1991 | TENGLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergruhd
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82